# EUROPEAN PATENT APPLICATION

(11) **EP 1 217 835 A2**
(43) Date of publication of application: **26.06.2002**
(21) Application number: 01130328.6
(22) Date of filing: 19.12.2001
(51) Int. Cl.: H04N 7/16, H04N 5/00

(54) **Authorization conditioned object message download**

(30) Priority: 19.12.2000 US 740559
(71) Applicant: General Instrument Corporation, Horsham, Pennsylvania 19044 (US)
(72) Inventor: Kimball, Bridget D., Encinitas, CA 92024 (US); Miller, Kenneth P., Poway, CA 92064 (US); Petty, Douglas M., San Diego, Ca 92127 (US); Eisenbart, Robert S., Chula Vista, CA 91910 (US); Poli, Christopher, Doylestown, PA 18901 (US)
(74) Representative: Bohnenberger, Johannes, Dr.

(57) **Abstract**

The invention relates to ways for more efficiently receiving information with a set top box. In one embodiment, a method for distributing a message in a conditional access system is disclosed. In one step authorization information is received and stored by a conditional access receiver. An identifier is determined with the authorization information. It is determined if the conditional access receiver is authorized to receive the message associated with the identifier. Receipt of the message associated with the identifier may be blocked based, at least in part, upon the determining if the conditional access receiver is authorized.

## Description

This application claims the benefit of priority from U.S. Application No. 09/493,984 filed on January 28, 2000.

### BACKGROUND OF THE INVENTION

This invention relates in general to conditional access systems and, more specifically, to ways for more efficiently receiving information with a set top box.

Cable television (TV) providers distribute content to users. Conditional access (CA) systems distribute video programming from a headend of the cable TV provider to a set top box associated with a user. The headend includes hardware that receives video and distributes it to the set top boxes within the CA system. Select set top boxes are allowed to decode certain video programs according to entitlement information sent by the cable TV provider to the set top box.

Video programs are broadcast to all set top boxes, but only a subset of those boxes are given access to specific video programs. For example, only those that have ordered a pay per view boxing match are allowed to view it even though every set top box may receive the match. Once a user orders the pay per view program, an entitlement message is broadcast in encrypted form to all set top boxes. Only the particular set top box the entitlement message is intended for can decrypt it. Inside the decrypted entitlement message is a key that will decrypt the pay per view program. With that key, the set top box decrypts the pay per view program as it is received in real-time.

### SUMMARY OF THE INVENTION

The invention relates to ways for more efficiently receiving information with a set top box. In one embodiment, a method for distributing a message in a conditional access system is disclosed. In one step authorization information is received and stored by a conditional access receiver. An identifier is determined with the authorization information. It is determined if the conditional access receiver is authorized to receive the message associated with the identifier. Receipt of the message associated with the identifier may be blocked based, at least in part, upon the determining if the conditional access receiver is authorized.

Reference to the remaining portions of the specification, including the drawings and claims, will realize other features and advantages of the present invention. Further features and advantages of the present invention, as well as the structure and operation of various embodiments of the present invention, are described in detail below with respect to the accompanying drawings.

### BRIEF DESCRIPTION OF THE DRAWINGS

Fig. 1 is a block diagram showing one embodiment of a conditional access system;
Fig. 2 is a block diagram illustrating another embodiment of a conditional access system;
Fig. 3 is a block diagram depicting an embodiment of an authorization message;
Fig. 4 is a block diagram showing an embodiment of a software message;
Fig. 5 is a block diagram illustrating an embodiment of a signatory group that includes portions of the authorization message and the software message;
Fig. 6 is a block diagram showing an embodiment of a "rights" message;
Fig. 7 is a block diagram showing the relationship between different objects in a set top box;
Fig. 8 is a block diagram illustrating an embodiment of interaction between functional units;
Fig. 9 is a flow diagram depicting an embodiment of a process for sending an authorization message and a software message to a set top box; and
Fig. 10 is a flow diagram showing an embodiment of a method for processing an authorization message and a software message.

### DESCRIPTION OF THE SPECIFIC EMBODIMENTS

The present invention more efficiently receives information with a set top box. In one embodiment, a authorization message is used to determine if the set top box is authorized to receive a software message. The software message is only downloaded if the set top box is authorized.

In the Figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

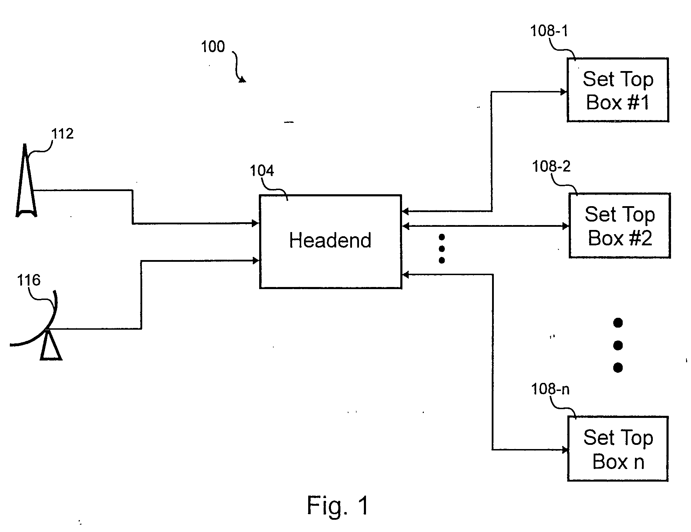

Referring first to Fig. 1, a block diagram of one embodiment of a conditional access (CA) system 100 is shown. The CA system 100 selectively provides content to a number of users based upon certain conditions being satisfied. Included in the system are a headend 104, number of set top boxes 108, local programming receiver 112, and satellite dish 116.

The headend 104 receives content and distributes that content to users. Content can include video, audio, interactive video, software, firmware, and/or data. Distributing firmware content allows updating the embedded programs within the set top box 108. This content is received from a variety of sources which include the satellite dish 116, local programming receiver 112, microwave receivers, packet switched networks, etc. Each set top box 108 has a unique address that allows sending entitlement information to an individual set top box 108. In this way, one set top box 108-1 can entitle a particular content while another 108-2 cannot. Equipment within the headend 104 regulates which set top boxes 108 are entitled to which content.

The content is generally distributed in digital form through an analog channel that contains multiple content streams. All the content streams are statistically multiplexed together into a digital stream modulated upon the analog carrier channel. The separate content streams are separated by packet identification (PID) information such that the individual content streams can be removed according to their unique PID information. There are around one hundred and twenty analog channels in this embodiment of the system 100. Other embodiments could distribute the content with satellite dishes, microwave antennas, RF transmitters, packet switched networks, cellular data modems, carrier current, or phone lines.

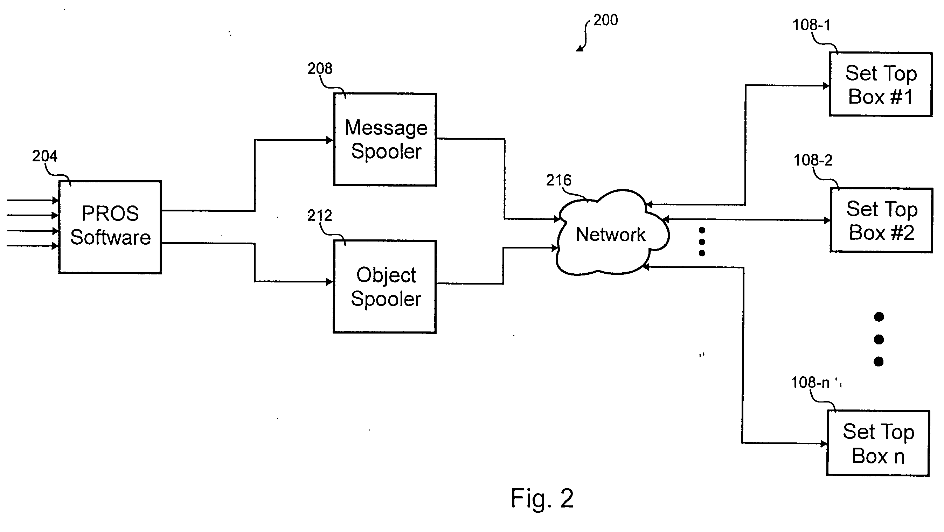

Referring next to Fig. 2, a block diagram of another embodiment of a CA system 200 is illustrated. This embodiment 200 shows the functional blocks 204, 208, 212 that receive the content and distribute it to the set top boxes 108. These functional blocks 204, 208, 212 could reside in the headed 104. Included in the CA system 200 are a permissions, resource, object signatory (PROS) software 204; a message spooler 208; an object spooler 212; a distribution network 216; and a number of set top boxes 108.

The PROS software 204 receives information from various sources and produces authorization, software and rights messages with that information. Things such as software access requirements, resource access requirements, configuration data, unsigned software objects, object information, rights information, etc. are received and processed by the PROS software 204. The resource access requirements indicate which set top box hardware resources can be accessed by the software object. Included in the configuration data is the domain identifier of the cable provider and the signing key(s). The object information contains the identification and version information of the software object. All this information is processed by the PROS software to produce the authorization and software messages. At this point, the messages are complete except for checksums.

The message spooler 208 receives and stores authorization and rights messages, and the object spooler 212 receives and stores the software messages. After adding a checksum, the messages are sent to the set top boxes 108. Even though these messages are broadcast to a number of set top boxes 108, addressing individual domain identifiers and set top box identifiers allows selecting a subset of the set top boxes 108 to receive the messages. The spoolers 208, 212 queue the messages, segment and format them for transport and couple them to the network 216. As the messages are sent out to the network 216, the spoolers 208, 212 calculate a checksum for each message and append that checksum to the end of the message.

The network 216 transports the messages from the message and object spoolers 208, 212 to the set top boxes 108. The network 216 could include a control data channel, MPEG data stream and/or packet switched network. The control data channel is an out of band data channel that contains configuration and control information. Messages sent in a MPEG data stream are statistically multiplexed on an analog carrier channel where the messages are distinguished by unique PIDs. The packet switched network could be the Internet, a network and/or a telephone line connection.

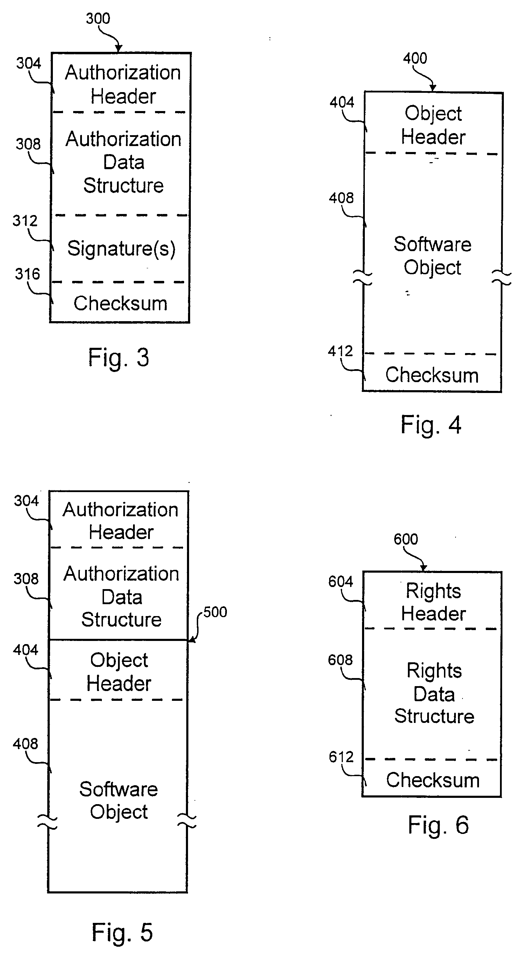

With reference to Figs. 3-5, an authorization message 300, a software message 400 and a signatory group 500 are respectively shown in block diagram form. Included in the authorization message 300 of Fig. 3 are an authorization header 304, an authorization data structure 308, a signature(s) 312, and a first checksum 316. The authorization message 300 has information used to both authenticate and authorize the software message 400. Forming the software message of Fig. 4 are an object header 404, a software object 408 and a second checksum 412. The software message 400 serves as the transport for the software object 408. The signatory group 500 includes components of the authorization message 300 and software message 400 arranged end-to-end. More specifically, the signatory group 500 of Fig. 5 includes the authorization header 304, authorization data structure 308, object header 404, and software object 408. The signature 312 is calculated over the whole signatory group 500.

The authorization header 304 indicates the configuration of the authorization message 300. Included in the header 304 are a subtype identifier and message version. The subtype identifier distinguishes the various types of authorization messages 300 from one another. In this embodiment, there are authorization message subtypes corresponding to software objects and resources. Software object subtypes have a corresponding software message 400, but resource subtypes do not. Accordingly, the subtype identifier is used to determine if there is a software message 400 associated with an authorization message 300. There may be several types of software object subtypes and resource subtypes for a given system and the message version allows distinguishing the various types.

The authorization data structure 308 provides requirements for a functional unit to the set top box 108. A functional unit is either a software object or a resource. In the case of an authorization message subtype corresponding to a software object, the authorization data structure 308 contains an object or functional unit identifier, a software version, cost information, entitlement information, lifetime information, and one or more program tiers. The object identifier is unique for each software object 408 and allows attributing an authorization message 300 to its corresponding software message 400. Version information is included in the data structure 308 to indicate the version of the software object 408.

Portions of the authorization data structure 308 are used to determine availability of the software object 408 to the set top box 108. The cost information indicates to the set top box 108, and sometimes the user, the price associated with the software object 408. Entitlement information is used to determine if the particular set top box 108 is authorized to accept the software object 408. The entitlement information may include a key if the software object 408 is encrypted with a symmetric key. If the set top box 108 is not authorized for the software object, there is no need to process the corresponding software object 408 when it is received. Lifetime information allows expiring of the authorization of the software object 408 to prevent use after a certain date or time. Programming tiers are used to restrict authorization of software objects 408 to predefined tiers such that a set top box 108 can only access software objects 408 within a predetermined tier(s).

The signature 312 is used to verify that portions of both the authorization message 300 and corresponding software message 400 are authentic. A hash function such as SHA-1 or MD5 is run over the whole signatory group, whereafter the result is run through a signing algorithm such as RSA, ECC and DSA to produce the signature. Alternatively, a simple CRC algorithm could be used for the hash function, whereafter the result could be sent through an encryption algorithm such as triple-DES or DES to produce the signature. When compiling the authorization message 300,the PROS software 204 calculates the signature 312 over the whole signatory group 500 before inserting the signature 312 into the authorization message 300. The set top box 108 calculates the signature of the signatory group 500 upon receipt of both the authorization and software messages 300, 400. Once the signature is calculated, it is checked against the received signature to authenticate portions of both the authorization and software messages 300, 400. If the signatures do not match, the set top box 108 discards the software message 400 because it presumably came from an improper source. Some embodiments could use multiple signatures to, among other reasons, support different set top boxes 108 in the system 100.

The first and second checksums 316, 412 are calculated with either linear or non-linear algorithms. These checksums 316, 412 verify the integrity of the data as it is transported to the set top box 108 over the network 216. For example, the checksum could be a cyclic redundancy check (CRC) which performs a binary addition without carry for each byte in the message. The message spooler 208 calculates the checksum 316 as the message 300 is being sent and appends the checksum 316 onto the end of the message 300. Conversely, the set top box 108 calculates the checksum as the message 300 is received and checks the calculated checksum against the checksum 316 in the received message 300. If the calculated and received checksums do not match, an error in transmission has occurred. Messages 300, 400 with errors are discarded whereafter the headend 104 may send replacement messages 300, 400. Some embodiments could use a digital signature rather than a checksum.

The object header 404 includes attributes for the software message 400. Included in the object header 404 are a header length, a software object length, the object identifier, the software version, and a domain identifier. The header length and software object length respectively indicate the lengths of the object header 404 and the software object 408. As described above, the object identifier provides a unique code which allows attributing the authorization message 300 to the software message 400. The software version indicates the version of the software object. Different cable providers are assigned domain identifiers such that all of the set top boxes 108, which might receive a software object 408, can screen for software objects 408 associated with their domain.

The software object 408 includes content the system 200 is designed to deliver to set top boxes 108. Several types of information can be embedded in a software object, such as executable programs, firmware upgrades, run-time programs (e.g., Java® or ActiveX®), programming schedules, billing information, video, audio, or data. The software object can be used immediately after authentication and authorization or at a later time. Additionally, authorization can be programmed to expire after a certain amount of time.

Referring specifically to Fig. 5, the signatory group 500 is shown. This group 500 is comprised of parts of both the authorization message 300 and the software message 400. All the data used to calculate the signature(s) 312 is included in the signatory group 500. Because the signature(s) 312 requires components from both the authorization message 300 and the software message 400, a failed signature check indicates one of the authorization message 300 and the software message 400 cannot be verified as originating from a trusted source. The trusted source being the PROS software 204 that generated the signature 312. If there are multiple signatures 312, the set top box 108 chooses at least one signature 312 that it understands to authenticate the signatory group 500.

Referring next to Fig. 6, an embodiment of a "rights" message 600 is shown in block diagram form. The rights message 600 conveys rights to use a functional unit. The functional unit could be an object or a resource. Typically, there is one rights message 600 for each set top box 108, which specifies any rights for all functional units. Requirements from the authorization message 300 that are associated with objects and resources are checked against the rights to determine if interaction with anotherobject or resource is authorized. The rights message 600 allows remotely adding new rights to a functional unit associated with the set top box 108. Although not shown, the rights message 600 typically includes a digital signature to verify the integrity of the message 600 during transport. In some embodiments, a checksum could be used instead of a digital signature.

The rights header 604 includes attributes for the rights message 600. Included in the rights header 604 are a header length, a rights data structure length, a set top box 108 identifier, and a domain identifier. The header length and the rights data structure length respectively indicate the lengths of the rights header 604 and the rights data structure 608. For authentication purposes, the set top box 108 identifier provides a unique code that allows attributing the rights message 600 to a particular set top box 108 in the system 100.

Rights are conveyed to all the functional units using the information in the rights data structure 608. A given functional unit may have rights to use several other functional units. These rights are contained in the rights data structure 608. Each functional unit identifier lists tier rights that are used to attribute the rights to a particular functional unit. The functional unit may be already in the set top box 108 or may be downloaded at some later time.

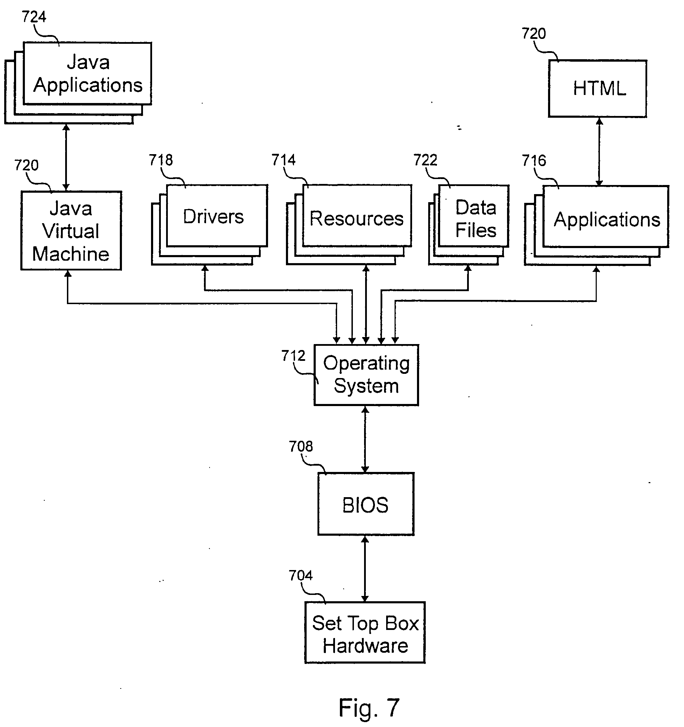

With reference to Fig. 7, some of the functional units of a set top box 108 are shown. Functional units toward the bottom of Fig. 7 are superordinate to the functional units near the top of Fig. 7. That is to say, functional units toward the top of Fig. 7 are subordinate to those lower in the figure. Superordinate functional units are responsible for imposing checkpoints on subordinate functional units. Checkpoints are places in software execution where authentication and/or authorization is performed on the running software object or another functional unit. For example, the hardware 704 imposes checkpoints upon the BIOS 708, OS 712 and so on up the subordination hierarchy. The BIOS 708 imposes checkpoints on the OS 712, but not upon the hardware 704. Functional units in the same ordination stratum can impose a checkpoint on another functional unit in that stratum when they interact. For example, an application 716 can require execution of a checkpoint that acts upon a driver 718.

Superordinate functional units are designed to initiate execution of the checkpoints and subordinate objects are designed to have checkpoints imposed upon them. For example, the BIOS 708 requires execution of a checkpoint upon the OS 712 during the boot process, during execution and/or periodically while running. A driver object 718 is subject to checkpoints when installed or exercised during normal operation. Data file objects 722 are subject to checkpoints whenever the data in the file is accessed. An HTML object 728 is reviewed as part of a checkpoint whenever the HTML object 728 is interpreted by a browser application 716.

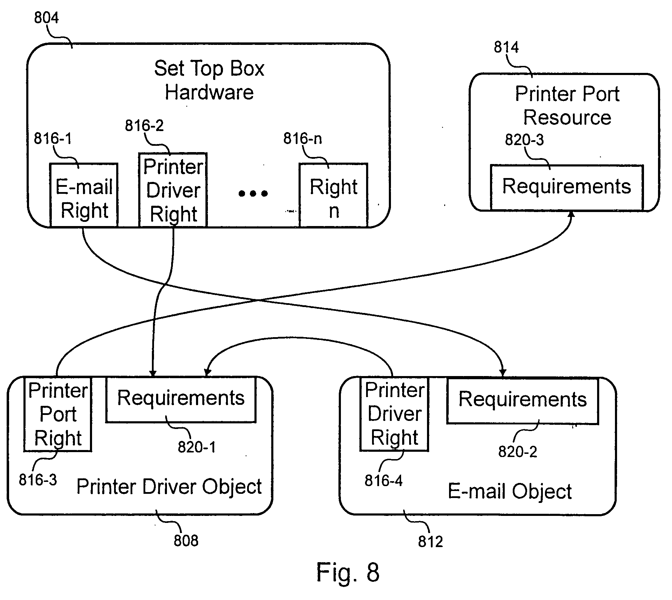

Referring next to Fig. 8, interaction between functional units is shown in block diagram form. The functional units associated with the set top box 108 include a set top box resource 804, a printer driver object 808, an e-mail object 812, and a printer port resource 816. During the normal interaction of these functional units, checkpoints are encountered that trigger authorization and/or authorization checks. The sole table correlates rights and requirements to each functional unit in Fig. 8. The functional unit identifier serves to correlate the software messages 400 with their authorization messages 300.

**Table**

| **Functional Unit ID** | **Functional Unit** | **Requirements** | **Rights** |
|---|---|---|---|
| 804 | Set Top Box | NA | E-mail, Printer Driver, etc. |
| 812 | E-mail | Yes | Printer Driver |
| 808 | Printer Driver | Yes | Printer Port |
| 814 | Printer Port | Yes | None |

The set top box resource 804 is superordinate to the e-mail object 812. When the e-mail object 812 is loaded, a checkpoint in the e-mail object 812 checks for proper rights. The proper rights are defined by the requirements 820-2 of the e-mail object 812 itself. If the e-mail right 816-1 meets the standards of the e-mail object requirements 820-2, the e-mail object 812 continues execution past the checkpoint. Authentication is performed after the e-mail right 816-1 and e-mail object requirements 820-2 are respectively loaded by their associated functional units 804, 812.

After the user receives the set top box 804, the user can add an optional printer. In this embodiment, the ability to print is an added feature that is not included in all set top boxes 804. If the printer is a purchase sanctioned by the content provider, printer driver rights 816-2, 816-4 and a printer port right 816-3 are sent in rights messages 600 to the set top box 804 from the headend 104.

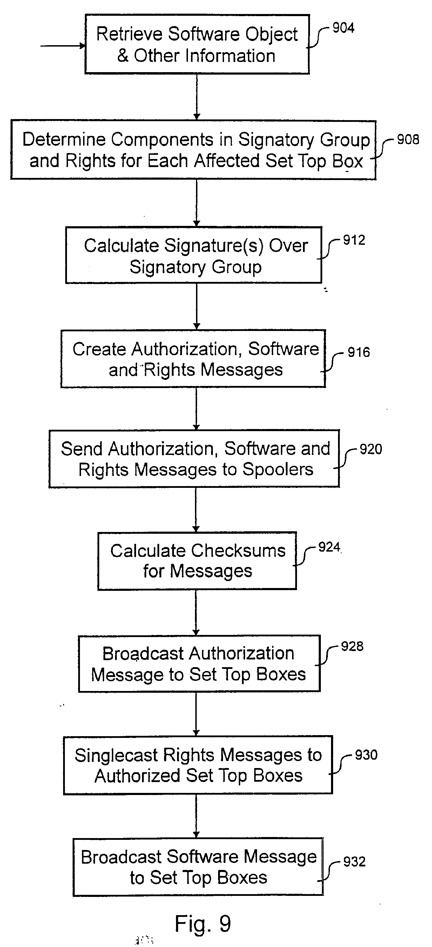

With reference to Fig. 9, a flow diagram of a process for broadcasting a software object 408 is shown. This process uses the PROS Software 204 to compile the information and create a signature whereafter the authorization message 300 and corresponding software message 400 are sent to their respective spoolers 208, 212. Preferably, the messages 300, 400 are sent through different transmission channels at different times.

The process begins in step 904 where the software object 408 and other information are loaded into the PROS software 204. This information includes such things as software access requirements, resource access requirements, configuration data, unsigned software objects, object information, rights information, etc. In step 908, the PROS software 204 determines the components of the signatory group 500 and the rights needed by the set top boxes 108. Once the signatory group 500 is determined, the signature 312 over that group 500 is calculated in step 912. More than one signature could be calculated in step 912 to support different set top boxes 108.

Once the signature 312 is calculated, the authorization, software and rights messages 300, 400, 600 are created in step 916. At this point, the messages 300, 400, 600 are complete except for the checksums 316, 412, 612. In step 920, the authorization, software and rights messages 300, 400, 600 are sent to the message and object spoolers 208, 212. Only the set top boxes 108 that will be authorized to use the software object 408 require replacement rights messages 600. Once the spoolers 208, 212 receive the authorization, software and rights messages 300, 400, 600, the checksums 316, 412, 612 are calculated to complete all fields in the messages 300, 400, 600.

After the authorization, software and rights messages 300, 400, 600 are complete, they are separately sent to the set top boxes 108. In step 928, the authorization message 300 is broadcast to the set top boxes 108 over a network 216. The network 216 could include a control data channel, MPEG data stream and/or packet switched network. After the authorization message 300 is sent, the rights message 600 is singlecasted to each affected set top box 108 in step 930. Once the authorization and rights messages 300, 600 are received, the set top box 108 can determine authorization.

In this embodiment, the messages 300, 400 are sent through different transmission pathways. The authorization and rights messages 300, 600 are sent over an out-of-band control data channel and the software message 400 is sent through a multiplexed MPEG data stream. A predetermined time delay may be used between steps 928 and 932 to separate the messages 300, 400 in time.

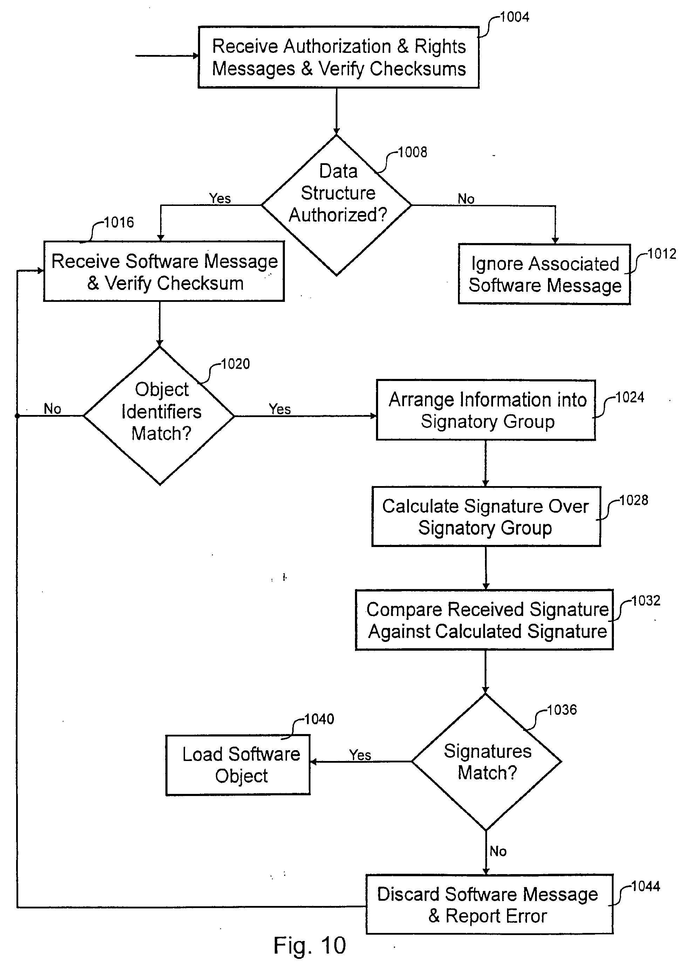

Referring next to Fig. 10, a flow diagram is shown that verifies, authenticates and authorizes a software object 408. This process is performed on each set top box 108 that receives the authorization, software and rights messages 300, 400, 600 even if the software object 408 is not authorized and cannot be executed.

The process begins in step 1004 where the authorization and rights messages 300, 600 are received from the network 216. After receipt of the messages 300, 600 the checksums 316, 612 are verified to trap broadcast errors. A threshold determination is made to decide if the data structure 308 is authorized by checking the entitlements in the rights message 600 in step 1008. Things such as cost information, entitlement information, lifetime information, and a program tier are used in this determination.

If it is determined that the software object 408 is not authorized, it is ignored when it arrives in step 1012. More specifically, the object or resource identifier is checked to see if the requirements from the authorization message 300 is satisfied by the rights in the rights message 600. If the object identifier is not already authorized, the software message 400 is ignored from the datastream and is not downloaded or otherwise processed.

Alternatively, processing continues to step 1016 if the software object 408 is determined authorized in step 1008. In step 1016, the software message 400 is received and the checksum 412 is verified to trap any transmission errors. The object identifiers in the authorization and software messages 300, 400 are compared to match together the messages 300, 400 in step 1020. If there is no match, the software message 400 is discarded and processing continues back to step 1016 to wait for the correct software message 400.

If the software message 400 has an object identifier which matches the object identifier of the authorization message 300, processing continues to step 1024 where the information is arranged into a signatory group 500. Most of the information in the authorization and software messages 300, 400 is used to form the signatory group 500. In step 1028, a signature is calculated over the signatory group 500. Once the signature is calculated, it is compared with the received signature 312 in step 1032.

If the calculated and received signatures match, as determined in step 1036, the software object 408 is authenticated as originating from an approved source and has not changed since being signed. Authenticated software objects 408 are retained and used by the set top box in step 1040. If the software object fails authentication in step 1036, the software message 400 is discarded and an error is reported back to the headend 104. By using this process, software objects are verified, authorized and authenticated before use.

In light of the above description, a number of advantages of the present invention are readily apparent. Objects that are not authorized are not downloaded by a set top box. Downloading consumes processing power from the set top box. Conserving processing power for authorized downloads increases the efficiency of the set top box.

A number of variations and modifications of the invention can also be used. For example, the sequence that the authorization, software and rights messages could have any order. The authorization and rights messages would still be referenced to show authorization before use of the software object. In other embodiments, the authorization, software and rights messages could be sent down separate data channels or use some of the same data channels.

Although the invention is described with reference to specific embodiments thereof, the embodiments are merely illustrative, and not limiting, of the invention, the scope of which is to be determined solely by the appended claims.

## Claims

1. A method for distributing a message in a conditional access system, the method comprising:
receiving authorization information by a conditional access receiver;
storing the authorization information;
determining an identifier with the authorization information;
determining if the conditional access receiver is authorized to receive the message associated with the identifier; and
blocking receipt of the message associated with the identifier based, at least in part, upon the determining if the conditional access receiver is authorized.

2. Method according to claim 1, wherein the blocking receipt of the message comprises:
recognizing the message corresponds with the identifier; and ignoring a portion of a datastream associated with the message.

3. Method according to one of claims 1 or 2, wherein the determining of the identifier comprises retrieving a subtype identifier from a header of the authorization information.

4. Method according to one of the preceding claims, wherein the determining if the conditional access receiver is authorized comprises determining entitlement for the message corresponding to the identifier.

5. Method according to one of the preceding claims, wherein the message comprises a software program.

6. Method according to one of the preceding claims, further comprising receiving an authorization message which comprises the receiving of the authorization information.

7. Method according to one of the preceding claims, wherein the storing of the authorization information comprises storing the authorization information with solid state memory.

8. Method according to one of the preceding claims, wherein the determining if the conditional access receiver is authorized comprises checking authorization within the conditional access receiver.

9. A method for distributing a message in a conditional access system, the method comprising:
receiving authorization information with a first conditional access receiver;
determining if the first conditional access receiver is authorized to receive the message; receiving authorization information with a second conditional access receiver; determining if the second conditional access receiver is authorized to receive the message;
blocking receipt of the message with the first conditional access receiver based, at least in part, upon the determining if the first conditional access receiver is authorized; and
receiving the message with the second conditional access receiver based, at least in part, upon the determining if the second conditional access receiver is authorized.

10. Method according to claim 9, wherein the blocking receipt of the message comprises ignoring a portion of a datastream associated with the message.

11. Method according to one of claims 9 or 10, wherein the determining if the first conditional access receiver is authorized comprises determining entitlement for the message corresponding to the identifier.

12. Method according to one of claims 9 to 11, wherein the message comprises a software program.

13. Method according to one of claims 9 to 12, wherein the determining if the first conditional access receiver is authorized comprises checking authorization within the first conditional access receiver.

14. A distribution program product for processing a message in a conditional access system, the distribution program product comprising:
code for receiving authorization information by a conditional access receiver;
code for storing the authorization information;
code for determining an identifier with the authorization information;
code for determining if the conditional access receiver is authorized to receive the message associated with the identifier; and
code for blocking receipt of the message associated with the identifier based at least in part upon the determining if the conditional access receiver is authorized.

15. Program according to claim 14, wherein the code for blocking receipt of the message comprises:
code for recognizing the message corresponds with the identifier; and code for ignoring a portion of a datastream associated with the message.

16. Program according to one of claims 14 or 15, wherein the code for determining the identifier comprises code for retrieving a subtype identifier from a header of the authorization information.

17. Program according to one of claims 14 to 16, wherein the code for determining if the conditional access receiver is authorized comprises code for determining entitlement for the message corresponding to the identifier.

18. Program according to one of claims 14 to 17, wherein the message comprises a software program.

19. Program according to one of claims 14 to 18, further comprising code for receiving an authorization message which comprises the code for receiving the authorization information.

20. Program according to one of claims 14 to 19, wherein the code for storing the authorization information comprises code for storing the authorization information with solid state memory.
